# EUROPEAN PATENT APPLICATION

(11) **EP 4 207 042 A1**
(43) Date of publication of application: **05.07.2023**
(21) Application number: 21861465.9
(22) Date of filing: 23.08.2021
(51) Int. Cl.: G06Q 50/06, G06Q 50/10

(54) **INFORMATION PROCESSING DEVICE, INFORMATION PROCESSING SYSTEM, INFORMATION PROCESSING METHOD, PROGRAM, AND RECORDING MEDIUM**

(30) Priority: 25.08.2020 JP 2020141872
(71) Applicant: 3DOM ALLIANCE INC., Tokyo 107-0052 (JP)
(72) Inventor: MATSUMURA, Akihiko, Yokohama-shi, Kanagawa 221-0022 (JP); HARADA, Masako, Yokohama-shi, Kanagawa 221-0022 (JP); ARIKAWA, Tomoaki, Yokohama-shi, Kanagawa 221-0022 (JP); SATSUKAWA, Seiji, Yokohama-shi, Kanagawa 221-0022 (JP)
(74) Representative: Winter, Brandl - Partnerschaft mbB
(86) International application number: PCT/JP2021/030723
(87) International publication number: WO 2022/045039

(57) **Abstract**

One aspect of the present invention provides an information processing device. This information processing device has a management unit and a determination unit. The management unit manages self-propelled cell devices. The cell devices include a first cell device that is the cell device of a first user. When power is lent to apparatuses of a second user using the first cell device, the determination unit determines the compensation returned to the first user by the second user on the basis of the power amount that was lent and a period for which power was lent.

## Description

### TECHNICAL FIELD

The present invention relates to an information processing apparatus, an information processing system, an information processing method, a program, and a storage medium.

### RELATED ART

In recent years, sharing economy, in which a plurality of users jointly use goods or service, or a user having excess amount appropriately provides or lends goods or service to other users who are consumers, has been attracting attention. Patent Document 1 discloses a power supply apparatus (battery) that can be lent or borrowed among a plurality of users and a system capable of managing such lending or borrowing thereof.

### PRIOR ART DOCUMENTS

### Patent Document

[Patent Document 1] JP 2019-164639 A

### SUMMARY OF INVENTION

### Problems to be Solved by Invention

However, the related art disclosed in Patent Document 1 merely discloses managing lending or borrowing of battery and does not disclose managing lending or borrowing of electric power (hereinafter referred to as "power") itself. If power is to be lent or borrowed, it is conceivable that a user who owns power more than predetermined amount of use will meet demand of other users to maintain a balance between supply and demand of power, yet the problem is how to determine a consideration among users who lend and borrow.

### Means for Solving Problems

According to an aspect of the present invention, an information processing apparatus is provided. This information processing apparatus comprises a management unit and a determination unit. The management unit is configured to manage a self-propelled battery apparatus. The battery apparatus includes a first battery apparatus that is a battery apparatus of a first user. The determination unit is configured to determine a consideration to be returned by a second user to the first user based on a power lending amount and power lending period when power is lent to a device of the second user using the first battery apparatus.

According to the above disclosure, it is possible to properly determine a consideration for power in power trading.

### BRIEF DESCRIPTION OF DRAWINGS

FIG. 1 is a diagram showing an example of a system configuration of an information processing system 1000.
FIG. 2 is a diagram showing an example of a hardware configuration of a server apparatus 100.
FIG. 3 is a diagram showing an example of a functional configuration of the server apparatus 100.
FIG. 4A is a diagram showing an example of information stored in a storage unit 220. FIG. 4B is a diagram showing data configuration of power lending information 224. FIG. 4C is a diagram showing data configuration of interest rate information 225.
FIG. 5 is a flowchart showing an example of information processing by a controller 210.
FIG. 6 is a diagram showing an example of a functional configuration of the server apparatus 100.
FIG. 7 is a diagram showing an example of an interest rate setting screen of a first user.
FIG. 8 is a diagram showing a screen 412 referred to when a second user wishes to charge.
FIG. 9 is a graphical diagram based on condition of a plurality of battery apparatuses 110 when the second user wishes to charge.
FIG. 10 is a diagram showing a screen 511, which is an example of a screen displayed on a terminal of the first user when the second user wishes to charge.
FIG. 11 is a flowchart showing an example of information processing of a first battery apparatus 111 when the second user wishes to charge.
FIG. 12 shows a screen 611 displayed on a terminal of the second user, including a value indicating a consideration that the first user who lent power receives in return from the second user who borrowed power.
FIG. 13 is a screen 711 displayed on a terminal of the first user, including a value indicating a consideration that the first user who lent power receives in return from the second user who borrowed power.
FIG. 14 is a diagram showing an example of a functional configuration of the server apparatus 100.
FIG. 15 is a diagram showing a screen 411 for confirming condition of a plurality of battery apparatuses 110 when the second user wishes to charge.
FIG. 16 is a flowchart showing an example of information processing by the controller 210.
FIG. 17 is a flowchart showing an example of information processing by the controller 210.
FIG. 18 is a flowchart showing an example of charge device selection processing by the controller 210.

### DESCRIPTION OF EMBODIMENTS

Hereinafter, embodiment of the present invention will be described with reference to the drawings. Various features described in the embodiment below can be combined with each other.

A program for realizing a software in the present embodiment may be provided as a non-transitory computer readable medium that can be read by a computer or may be provided for download from an external server or may be provided so that the program can be activated on an external computer to realize functions thereof on a client terminal (so-called cloud computing).

In the present embodiment, the "unit" may include, for instance, a combination of hardware resources implemented by a circuit in a broad sense and information processing of software that can be concretely realized by these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

Further, the circuit in a broad sense is a circuit realized by at least an appropriate combination of a circuit, a circuitry, a processor, a memory, or the like. In other words, it is a circuit includes application specific integrated circuit (ASIC), programmable logic device (e.g., simple programmable logic device (SPLD), complex programmable logic device (CPLD), field programmable gate array (FPGA)), or the like.

### <First embodiment>

Hereinafter, a first embodiment will be described.

### 1. Configuration of information processing system 1000

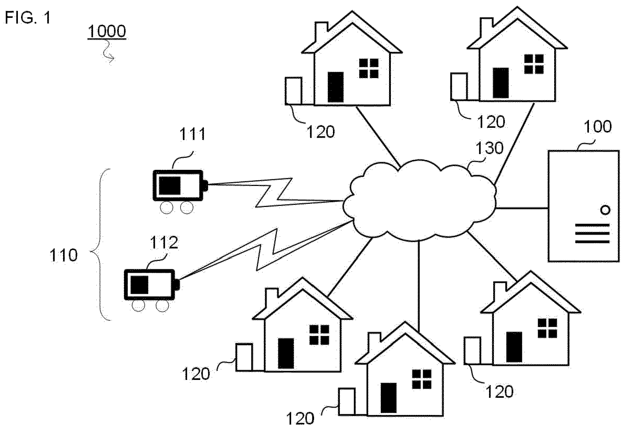

FIG. 1 is a diagram showing an example of a system configuration of an information processing system 1000. As shown in FIG. 1, the information processing system 1000 comprises a server apparatus 100, a plurality of battery apparatuses 110, a plurality of storage batteries 120, and a network 130. The server apparatus 100 is communicatively connected to the plurality of battery apparatuses 110 and the storage battery 120 via the network 130.

The plurality of battery apparatuses 110 are apparatuses that each include a wheel and self-propelled within a predetermined area using its own power. The plurality of battery apparatuses 110 may each be owned by a different user and include, for instance, a first battery apparatus 111, which is a battery apparatus 110 of a first user, and a second battery apparatus 112, which is a battery apparatus 110 of a second user. The plurality of battery apparatuses 110 supply power to the storage battery 120 in the area. Further, the plurality of battery apparatuses 110 receive power supplied from the storage battery 120 in the area. Furthermore, the plurality of battery apparatuses 110 may each supply power to each other. The server apparatus 100 is an example of an information processing apparatus.

The storage battery 120 is an example of a device that receives power supply from at least any one of the plurality of battery apparatuses 110 (hereinafter sometimes simply referred to as "battery apparatus"). The storage battery 120 may be a battery-powered vehicle, a motorized vehicle such as a car, a motorcycle, a bicycle, or a boat, or a rechargeable home appliance. The storage battery 120 may receive power supply directly from the battery apparatus, or may receive power supply from the battery apparatus via a device. The storage battery 120 is an apparatus that supplies power to household appliance.

### 2. Hardware configuration of server apparatus 100

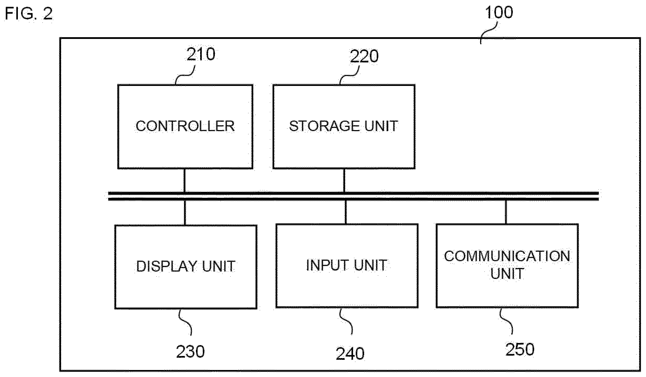

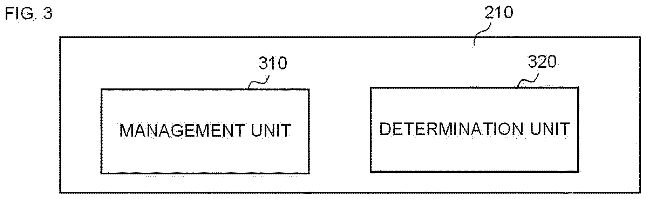

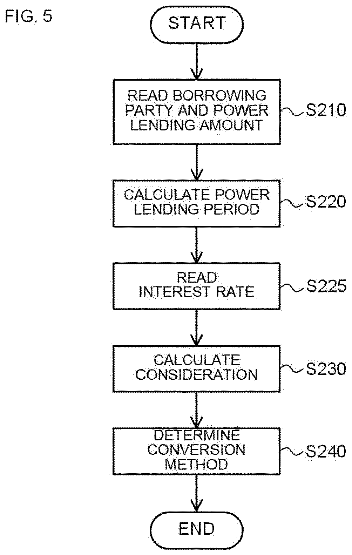

FIG. 2 shows an example of a hardware configuration of the server apparatus 100. As shown in FIG. 2, the server apparatus 100 comprises a controller 210, a storage unit 220, a display unit 230, an input unit 240, and a communication unit 250. The controller 210 is a CPU (Central Processing Unit) or the like, and is configured to control the entire server apparatus 100. The storage unit 220 stores various programs and data and is configured of, for instance, memory, HDD (Hard Disk Drive), ROM (Read Only Memory), RAM (Random Access Memory), or the like. Further, the storage unit 220 stores data or the like used when the controller 210 executes processing based on a program. By executing processing by controller 210 based on the program stored in the storage unit 220, functional configuration of FIGS. 3, 6, and 14 below and processing of flowcharts of FIGS. 5, 11, 16, 17, and 18 described later are realized. With respect to the storage unit 220, at least some information may be stored in an external server other than the storage unit 220 or may be distributed to a plurality of terminals using blockchain technology or the like. The storage unit 220 is an example of a storage medium.

The display unit 230 is configured to display text or image (including static image and moving image) and is configured of any display. The input unit 240 inputs various information to the server apparatus 100 and is configured of mouse, keyboard, pointing device, etc. The communication unit 250 is a NIC (Network Interface Card) or the like, and is configured to connect the server apparatus 100 via the network 130 and to enable data communication with other apparatus or component through a wired or wireless connection.

### 3. Functional configuration of server apparatus 100

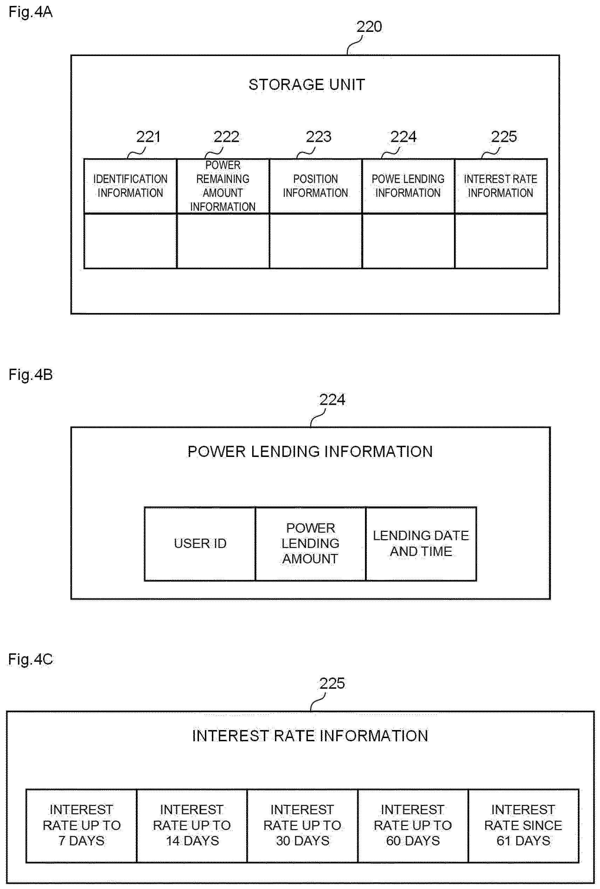

FIG. 3 is a diagram showing an example of a functional configuration of the server apparatus 100. FIG. 4A is a diagram showing an example of information stored in the storage unit 220. As shown in FIG. 3, the controller 210 comprises a management unit 310 and a determination unit 320.

The management unit 310 is configured to read various information stored in the storage unit 220 and to manage the information processing system 1000. More specifically, the management unit 310 reads information stored in the storage unit 220 and controls operation of the plurality of self-propelled battery apparatuses 110.

As shown in FIG. 4A, the storage unit 220 stores data configured of identification information 221, power remaining amount information 222, position information 223, power lending information 224, and interest rate information 225 for a number of the plurality of battery apparatuses 110. FIG. 4B is a diagram showing data configuration of the power lending information 224. FIG. 4C is a diagram showing data configuration of the interest rate information 225.

The identification information 221 is information that identifies each of the plurality of battery apparatuses 110. For instance, the identification information 221 is set to a unique ID to specify each of the plurality of battery apparatuses 110. The power remaining amount information 222 is information that indicates amount of remaining power of the plurality of battery apparatuses 110. In other words, the power remaining amount information 222 is set to a power amount accumulated by each of the plurality of battery apparatuses 110. The position information 223 is information indicating position of each of the plurality of battery apparatuses 110. For example, the position information 223 is set to latitude and longitude of position of each of the plurality of battery apparatuses 110.

As shown in FIG. 4B, when power is lent to a device of the second user using the first battery apparatus 111, the power lending information 224 is information that indicates a user ID indicating a party who borrowed power (in this case, the second user), power lending amount, and lending date and time. Here, the user ID indicates a unique ID for specifying a user. The power lending amount is usually managed in a unit of "kW". The lending date and time indicates date and time when power is actually lent to a device of the second user.

As shown in FIG. 4C, the interest rate information 225 is information indicating an interest rate agreed upon between the first user and the second user at the time the power is lent. In other words, an act of lending power to the device of the second user using the first battery apparatus 111 based on an agreed interest rate is performed. The interest rate information 225 includes a plurality of interest rates based on a number of days from the time of lending. FIG. 4C shows an example where the interest rate is set for up to 7 days, up to 14 days, up to 30 days, up to 60 days, or since 61 days, starting from a date the power is lent.

Based on the power lending information 224 and the interest rate information 225, the determination unit 320 is configured to determine a consideration to be returned by the second user to the first user based on a power lending amount, a power lending period, and an interest rate agreed at the time the power is lent when power is lent to a device of the second user using the first battery apparatus 111. Here, the consideration may be either power or money, and a choice of which is determined by agreement between the first user and the second user. In principle, the consideration is a concept that includes interest in addition to the amount power that is lent. The interest is calculated in light of an interest rate set in the interest rate information 225, i.e., the interest rate agreed upon in advance between the first user and the second user, as described above.

Here, the ID in the identification information 221 indicates an ID of the battery apparatus as described above, and the user ID in the power lending information 224 indicates the user ID as described above. Although not shown in the figure, the storage unit 220 is configured to tie owner information of the battery apparatus to each of the identification information 221. Thus, even if one user may own a plurality of battery apparatuses, the identification information 221 and the power lending information 224 are tied together in such a manner that it can be known which user owns which battery apparatus.

### 4. Information processing

Next, processing by the determination unit 320 will be illustrated using FIG. 5. FIG. 5 is a flowchart showing an example of information processing by the controller 210. The determination unit 320 reads a party to whom the power is lent and a power lending amount from the power lending information 224 stored in the storage unit 220 (S210). Next, the determination unit 320 reads date and time when the power is lent from the power lending information 224 and calculates a power lending period (S220). Then, the determination unit 320 reads an interest rate agreed upon between the first user and the second user from the interest rate information 225 (S225). Order of S210, S220 and S225 does not have to be in the order described in the flowchart shown in FIG. 5 and may be read simultaneously in one readout process.

Based on the information obtained in S210, S220, and S225, the determination unit 320 is configured to calculate a consideration (S230). Here, calculating the consideration means calculating an amount of consideration, i.e., a power amount if it is power, or an amount of money if it is money. Next, the determination unit 320 determines a method of returning the consideration to be returned by the second user to the first user (S240).

The method of returning power charge can be either power or money. For example, either power or money may be set in an area managed by the server apparatus 100, or may be set by the first user in advance, or may be set after adjustment between the first user and the second user at an arbitrary time.

In addition, since the server apparatus 100 manages the plurality of battery apparatuses 110 in the first embodiment, a communication amount can be reduced compared to mesh communication, in which each of the plurality of battery apparatuses 110 communicates directly.

In summary, the information processing method includes a management step and a determination step. The management step manages the plurality of self-propelled battery apparatuses 110. Here, the plurality of battery apparatuses 110 include the first battery apparatus 111 that is the battery apparatus 110 of the first user. The determination step determines a consideration to be returned by the second user to the first user based on a power lending amount, a power lending period, and an interest rate agreed upon between the first user and the second user when power is lent to a device of the second user using the first battery apparatus 111.

In the first embodiment, the owner information is tied to each battery apparatus 110, enabling clear management of the first user as a lender and the second user as a borrower. Furthermore, by adopting a form in which the battery apparatus 110 is self-propelled, the first user and the second user who lend and borrow the power can more easily lend and borrow power without having to keep in touch or meet in person to hand over the battery apparatus 110. In addition, by determining the consideration based on the power lending amount, the power lending period, and the agreed upon interest rate, the consideration for power supply can be determined appropriately. In other words, the first user may receive interest in addition to power or money equivalent to the power lending amount.

### <First variation>

Hereinafter, a first variation will be described. In the first variation, description of a part that overlap with the first embodiment will be omitted as appropriate.

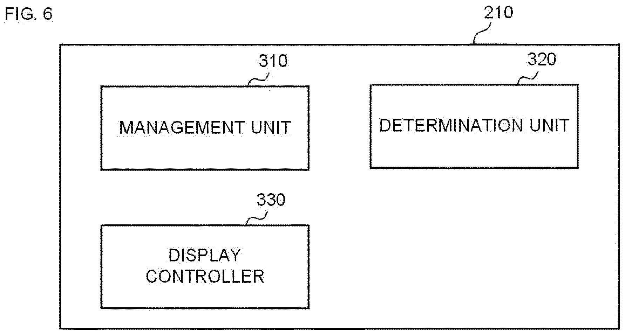

FIG. 6 is a diagram showing another example of a functional configuration of the server apparatus 100. As shown in FIG. 6, the controller 210 further comprises a display controller 330 in the functional configuration shown in FIG. 2. The display controller 330 is configured to control in such a manner that a screen for setting an interest rate when lending power to an apparatus of another user or a screen for confirming lending status is displayed on a display unit of a terminal of the first user. Further, the display controller 330 is configured to control in such a manner that a screen including a value indicating a consideration that the first user receives in return from the second user is displayed on a display unit of a terminal of the second user. The terminal of the first user and the terminal of the second user indicate a device used by the user, such as smartphone, cell phone, TV, PC, etc., and the display unit indicates these displays. Here, it is assumed that the display controller 330 generates a screen and displays the screen on the display unit of the terminal of the first user or the second user. However, the display controller 330 may transmit data for generating a screen to the terminal of the first user or the second user. In such a configuration, the terminal of the user that receives the data generates a screen based on the data and displays the screen on the display unit. Such processing is included in the display control as well.

In the first variation, the display controller 330 generates a screen to be displayed on the terminal of the first user or the second user, and allows the screen to display on the terminal of the first user or the second user, in such a manner that the first user or the second user can understand how much consideration is being generated by purchase or sale of power as appropriate.

### <Second variation>

Hereinafter, a second variation will be described. In the second variation, description of a part that overlap with the first embodiment and the first variation will be omitted as appropriate.

In the second variation, function of the server apparatus 100 is assumed to be performed by any one battery apparatus among the plurality of battery apparatuses 110. In the second variation, the battery apparatus responsible for the function of the server apparatus 100 is referred to as a master battery apparatus. In such a configuration, each of the plurality of battery apparatuses 110 communicates with the master battery apparatus based on address information (e.g., IP address) of the master battery apparatus. The IP address of the master battery apparatus is assumed to be set in advance for the plurality of battery apparatuses 110 other than the master battery apparatus. Here, the IP address is an example of address information that identifies the master battery apparatus, and is not limited to IP addresses as long as the address information can uniquely specify the master battery apparatus.

According to the second variation, it is possible to determine an appropriate consideration for power supply based on the amount of power that is lent and the period of time during which the power is lent via the master battery apparatus without installing the server apparatus 100.

### < Third variation>

Hereinafter, a third variation will be described. In the third variation, description of a part that overlap with the first embodiment, the first variation, and the second variation will be omitted as appropriate.

In the first embodiment, the first variation, and the second variation described above, it is assumed that one server apparatus 100 or one master battery apparatus performs the processing. However, if all processing is performed by a single server apparatus 100 or a single master battery apparatus, there is a concern that all services may be stopped if an unforeseen situation occurs in the server apparatus 100 or the master battery apparatus. Therefore, it is conceivable that processing performed by one server apparatus 100 or one master battery apparatus may be performed by a plurality of apparatus, for instance, an information processing system configured of a plurality of second server apparatuses.

This is achieved by having the second server apparatus execute processing based on a program stored in the storage unit of each of the second server apparatuses. For instance, by assigning the second server apparatus in charge of management according to the identification information 221 and identifying it based on the identification information 221, impact in the information processing system can be minimized even if an unforeseen situation occurs in a certain second server apparatus. Here, the plurality of apparatuses executing processing of the server apparatus 100 may be a plurality of storage batteries 120. Note that the processing may be performed mainly by a cloud system instead of the information processing system.

The plurality of apparatus executing processing of the server apparatus 100 or the master battery apparatus may be configured, for instance, with all the battery apparatuses 110 and all the storage batteries 120 in a predetermined area in charge. This is achieved by all battery apparatuses 110 and all storage batteries 120 in the predetermined area managing their own power storage amount, communicating among the plurality of apparatuses, and executing processing related to purchasing and selling of power based on a program stored in the storage unit of the respective apparatuses.

In the configuration, the first user who owns the battery apparatus 110 or the storage battery 120 can confirm to the second user whether or not charging is necessary in light of power owned by the other battery apparatus 110 or the storage battery 120 owned by the second user. In this way, by having all of the battery apparatuses 110 and all of the storage batteries 120 in the predetermined area take charge of the processing of one server apparatus 100 or one master battery apparatus, when an unforeseen situation occurs in either the battery apparatus 110 or the storage battery 120, a range of influence can be limited to the battery apparatus 110 or the storage battery 120 only.

### <Fourth variation>

Hereinafter, a fourth variation will be described. In the fourth variation, description of a part that overlap with the first embodiment, the first variation, the second variation, and the third variation will be omitted as appropriate.

In the first embodiment, etc., described above, it is assumed that a device receiving power supply from at least one of the plurality of battery apparatuses 110 is the storage battery 120. However, this is not limited thereto, and the device receiving power supply from at least one of the plurality of battery apparatuses 110 may be a battery apparatus other than the battery apparatus supplying power among the plurality of battery apparatuses 110.

According to the fourth variation, it is possible to trade power between battery apparatuses, activating power trading within a predetermined area and determining an appropriate consideration for the power trading.

### <Fifth variation>

Hereinafter, a fifth variation will be described. In the fifth variation, description of a part that overlap with the first embodiment, the first variation, the second variation, the third variation, and the fourth variation will be omitted as appropriate.

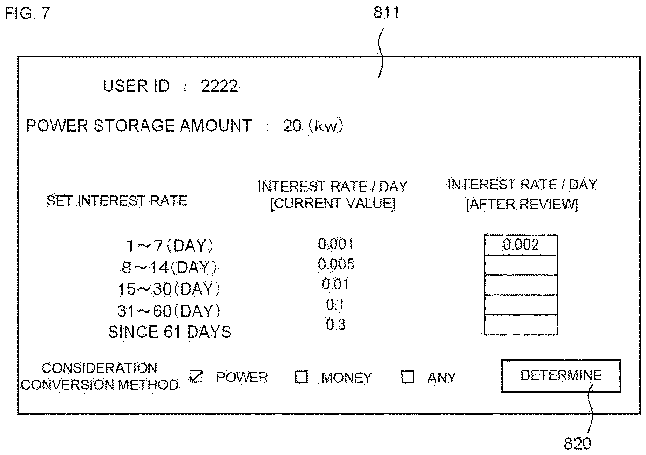

Here, how the first user determines an interest rate will be described. FIG. 7 is a diagram showing an example of an interest rate setting screen of the first user. The first user is a user corresponding to user ID: 2222 shown in FIG. 7. When the first user reviews an interest rate, a screen 811 is displayed on a smartphone of the first user by the first user performing a predetermined operation.

In FIG. 7, for instance, a power lending period is divided into five periods, and an interest rate corresponding to each period can be set. The first user can review the interest rate at any time. If power is already lent to the second user at the time the interest rate is being reviewed, the interest rate at the time the power is lent to the second user is applied, not the interest rate during or after the review.

In FIG. 7, when a reviewed interest rate column is left blank, a current set value is assumed to be carried over, but the current set value may be displayed in the reviewed interest rate column when the screen 811 is displayed. In addition, it is possible to designate a return method when asking the second user to return the consideration for the power that is lent. In FIG. 7, the first user desires to be returned by power, and has checked a check box for power. Then, when a "determine" button 820 is clicked by the first user, a reviewed interest rate and a designated consideration return method are applied.

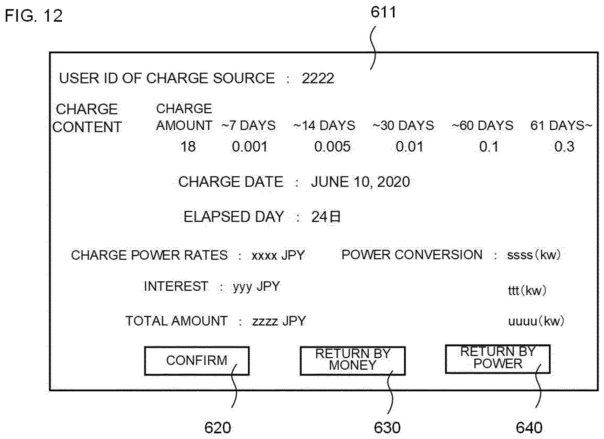

As described above, the first user can designate the consideration return method. As shown in FIG. 12 described later, a screen 611 of the second user shows the consideration (amount of money and power amount) for borrowed power, and by clicking a "return by power" button 640 or a "return by money" button 630, respectively, the user can return by power or by money. However, if the first user designates either return by power or return by money on the screen 811 shown in FIG. 7, on the screen of the second user, only the button for the return method designated by the first user will be active, and the other will be inactive.

### <Sixth variation>

Hereinafter, a sixth variation will be described. In the sixth variation, description of a part that overlap with the first embodiment, the first variation, the second variation, the third variation, the fourth variation, and the fifth variation will be omitted as appropriate.

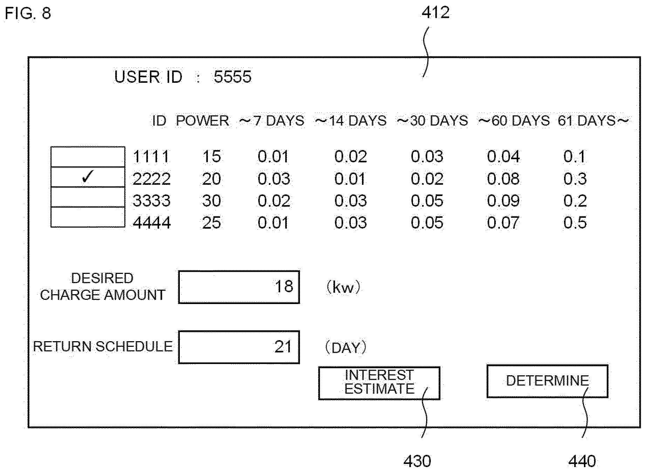

FIG. 8 shows a screen 412 to be referred when the second user wishes to charge. The screen 412 is a screen that allows each of the plurality of first users to confirm holding power and interest rate per period set on the screen shown in FIG. 7 in a list for each of the identification information 221 assigned to each of the plurality of battery apparatuses 110.

Here, a display object on the screen 412 of a smartphone of the second user may be all the battery apparatuses 110 or a plurality of battery apparatuses 110 positioned within a predetermined range from the second user. Alternatively, it may be a plurality of battery apparatuses 110 that match a condition set by the second user in advance, such as interest rate condition. Description of a condition setting screen is omitted here.

The second user can compare and determine which battery apparatus 110 to charge from based on the list shown in FIG. 8. If the number of the plurality of battery apparatuses 110 to be displayed is too large to fit on the screen 412, a scroll bar may be provided or a page break may be performed by button control to allow viewing of all subject information. In addition, information regarding the battery apparatuses 110 with good condition for the second user, such as low interest rate, may be extracted and adjusted to fit within the screen 412.

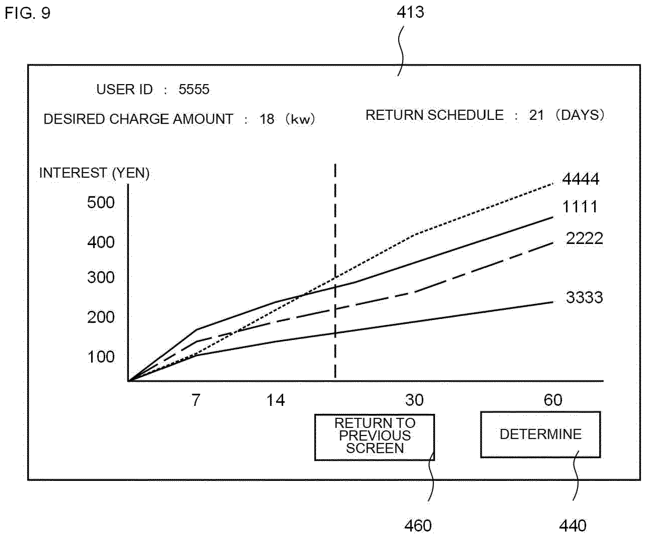

When the second user clicks on an "interest estimate" button 430 after inputting a desired charge amount and a return schedule (a number of day elapsed from a date that power is borrowed) on the screen 412 shown in FIG. 8, the screen transitions from the screen 412 to a screen 413 shown in FIG. 9. FIG. 9 is a graphical representation based on a condition of the plurality of battery apparatuses 110 when the second user wishes to charge. In other words, a variation of interest is graphically displayed on the screen 413 in accordance with a borrowed period based on the interest rate displayed on the screen 412.

In this way, interest of each battery apparatus 110 on a scheduled date when the second user returns power to the first user can be compared at a glance. In FIG. 9, although the interest is shown as an amount of money, the power amount to be returned may also be displayed. In addition, although the interest is shown in FIG. 9, it may be displayed as a consideration including the interest.

Accordingly, the second user can compare the scheduled return date with the interest on that date to properly select which battery apparatus to charge from. The second user can click on a "return to previous screen" button 460 to confirm the screen 412 again.

### <Seventh variation>

Hereinafter, a seventh variation will be described. In the seventh variation, description of a part that overlap with the first embodiment, the first variation, the second variation, the third variation, the fourth variation, the fifth variation, and the sixth variation will be omitted as appropriate.

When the second user selects the first battery apparatus 111 on the screen 412 in FIG. 8 and clicks on a "determine" button 440, a charge request is sent to the first user (the battery apparatus 110 with user ID: 2222 shown in FIG. 7). The second user waits until the first user either accepts or rejects the request. Here, it is preferable if a predetermined validity time is set in advance from the time the charge request is sent until either acceptance or rejection is received.

Once the second user receives acceptance from the first user, a charging process from the first battery apparatus 111 is started. Specifically, the first battery apparatus 111 moves to a location where the second user is located to perform the charging process. When the first user rejects the request that sent to the first user, or if the validity time has expired, the screen 412 shown in FIG. 8 is displayed and the second user needs to select another battery apparatus 110.

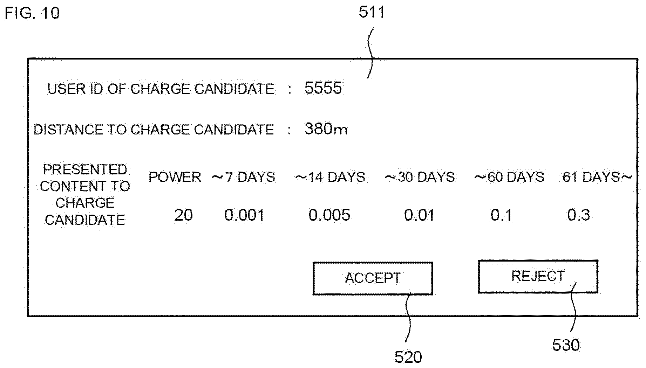

FIG. 10 is a diagram showing a screen 511, which is an example of a screen displayed on the terminal of the first user when the second user wishes to charge. When the second user requests charging from the first user, the screen 511 is displayed on the smartphone of the first user. On the screen 511, information of the second user and content of presentation to the second user are displayed. Based on the information displayed on the screen 511, the first user may click an "accept" button 520 to accept the charge request or click a "reject" button 530 to reject the charge request. If the first user rejects, the second user needs to select another battery apparatus 110 on the screen 412 shown in FIG. 8.

In addition, when requesting charge, the charging may be requested in future rather than immediately, such as where the charging is desired after 5 hours. Description of a condition setting screen at this time is omitted. In this case, by adding a time corresponding to a desired charge time to a predetermined validity time, the validity time can be given a grace period, giving the first user enough time to consider whether to accept or reject the request.

In the seventh variation, correspondence in which the second user who wishes to charge requests charging to the first user who owns the power is described. In addition to a charge request from the second user to the first user, the first user can also propose charging to the second user. Specifically, on the screen of the first user, charging can be proposed to the second user who owns a battery apparatus with a small amount of stored power. In this way, when the first battery apparatus 111 has excessive power, it is possible to supply the retained power and obtain a consideration.

### <Eighth variation>

Hereinafter, an eighth variation will be described. In the eighth variation, description of a part that overlap with the first embodiment, the first variation, the second variation, the third variation, the fourth variation, the fifth variation, the sixth variation, and the seventh variation will be omitted as appropriate.

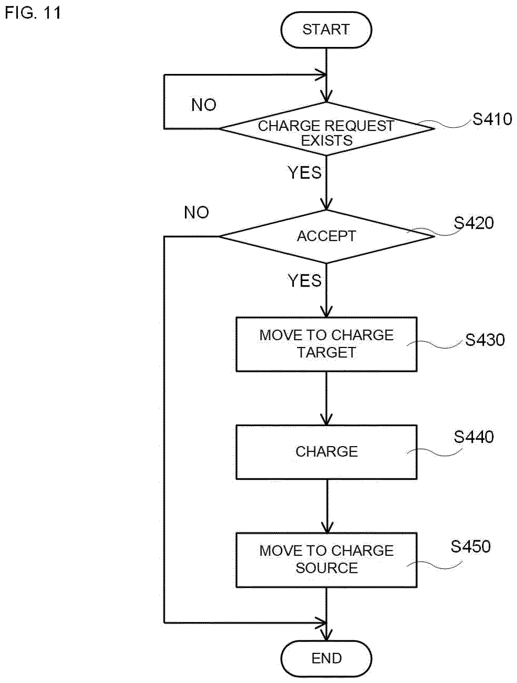

FIG. 11 is a flowchart showing an example of information processing of the first battery apparatus 111 when the second user wishes to charge. When a controller of the first battery apparatus 111 (simply described as "controller" in the description of the eighth variation), which is not shown in the figure, determines that there is a charge request (YES in S410), the controller then determines whether the charge request has been accepted (S420). If the controller determines that the request has not been accepted (NO in S420), processing flow terminates. If the controller determines that the request has been accepted (YES in S420), the controller allows the first battery apparatus 111 to move to a charge target (S430). The controller then performs charging process from the first battery apparatus 111 to a device of the second user (e.g., the second battery apparatus 112) (S440) and allows the first battery apparatus 111 to move to original location (S450).

### <Ninth variation>

Hereinafter, a ninth variation will be described. In the ninth variation, description of a part that overlap with the first embodiment, the first variation, the second variation, the third variation, the fourth variation, the fifth variation, the sixth variation, the seventh variation, and the eighth variation will be omitted as appropriate.

FIG. 12 shows a screen 611 displayed on the terminal of the second user that includes a value indicating a consideration to be returned by the second user who borrowed power to the first user who lent the power. The screen 611 is displayed on a smartphone of the second user or the like. The screen 611 displays a power charge amount charged from the first battery apparatus 111, an interest rate corresponding to a borrowing period, a charge date, a number of day elapsed from the charge date, an amount of money to be returned by money, a power amount to be returned by power, etc. Here, the amount of money to be returned by money and the power amount to be returned by power are calculated based on the number of days elapsed from the charge date and the interest rate corresponding to the borrowing period.

The screen 611 may be displayed, for instance, at a predetermined time each day, or may be displayed at any timing by operation on the smartphone of the second user or the like. The second user completes confirmation process by clicking a "confirm" button 620 after viewing a displayed content. When the second user returns the consideration to the first user, after viewing the content displayed on screen 611, the second user clicks the "return by money" button 630 if returning by money or clicks the "return by power" button 640 if returning by power. This completes a process of returning consideration to the first user. However, if the first user designates either return by power or return by money on the screen 811 shown in FIG. 7, only the button for the return method designated by the first user will be active on the screen 611 of the second user, and the other will be inactive.

### <Tenth variation>

Hereinafter, a tenth variation will be described. In the tenth variation, description of a part that overlap with the first embodiment, the first variation, the second variation, the third variation, the fourth variation, the fifth variation, the sixth variation, the seventh variation, the eighth variation, and the ninth variation will be omitted as appropriate.

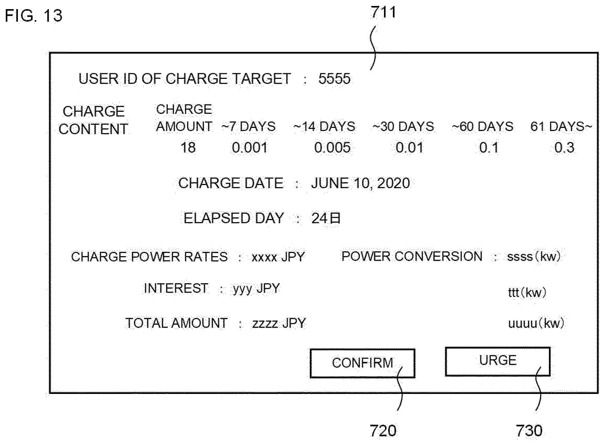

FIG. 13 shows a screen 711 displayed on the terminal of the first user that includes a value indicating the consideration that the first user who lent the power receives from the second user who borrowed the power. The screen 711 is displayed on a smartphone of the first user or the like. The screen 711 displays an amount of charge charged by the first battery apparatus 111, an interest rate corresponding to a lending period, a charge date, a number of day elapsed from the charge date, an amount of money to be returned by money, a power amount to be returned by power, etc. Here, the amount of money to be returned by money and the power amount to be returned by power are calculated based on the number of days elapsed from the charge date and the interest rate corresponding to the lending period.

The screen 711 may be displayed, for instance, at a predetermined time each day, or may be displayed at any timing by operation on the smartphone of the first user or the like. The first user completes confirmation process by clicking a "confirm" button 720 after viewing a displayed content. The first user clicks a "urge" button 730 when desiring to receive the consideration back from the second user. With this operation, the first user notifies the second user of a demand to return the consideration. The notification of the demand may be by e-mail or may be displayed as a pop-up on the smartphone of the second user or the like according to an instruction of the display controller 330.

### <Eleventh variation>

Hereinafter, an eleventh variation will be described. In the eleventh variation, description of a part that overlap with the first embodiment, the first variation, the second variation, the third variation, the fourth variation, the fifth variation, the sixth variation, the seventh variation, the eighth variation, the ninth variation, and the tenth variation will be omitted as appropriate.

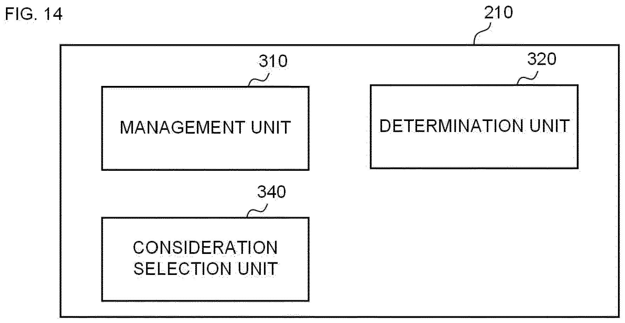

FIG. 14 is a diagram showing an example of functional configuration of the server apparatus 100. As shown in FIG. 14, the controller 210 further comprises a consideration selection unit 340. The consideration selection unit 340 allows the second user to select type of consideration to be returned to the first user when the first user has not previously designated the type of consideration to be returned by the second user. In other words, when the consideration selection unit 340 determines that "any" is selected as the consideration return method on the screen 811 shown in FIG. 7, the consideration selection unit 340 activates both the "return by money" button 630 and the "return by power" button 640 on the screen 611 in FIG. 12. This process allows the second user to select the type of consideration. The type of consideration indicates, for example, power or money as described above.

In the eleventh variation, for instance, if the first user has previously designated "power" as the type of consideration, the second user will return the power amount displayed on the screen 611 to the first user. In this case, the second user returns power based on a charge target device of the first user, time and charging location as displayed on a screen not shown. If it is necessary to adjust at least one of the charge target device, the time, and the charging location between the first user and the second user, then they shall adjust accordingly.

In the eleventh variation, a threshold for receiving power lent from the first user is lowered because the second user can choose a desired consideration. Therefore, socio-economic activation can be promoted through power supply.

### <Twelfth variation>

Hereinafter, a twelfth variation will be described. In the twelfth variation, description of a part that overlap with the first embodiment, the first variation, the second variation, the third variation, the fourth variation, the fifth variation, the sixth variation, the seventh variation, the eighth variation, the ninth variation, the tenth variation, and the eleventh variation will be omitted as appropriate.

In the twelfth variation, when power is lent to a device of the second user using the first battery apparatus 111, the power lending information 224 includes power origin in addition to a powerlending amount, power lending period, and an interest rate agreed upon when the power is lent. Here, the power origin is information that indicates how the power is generated, such as power generated by a thermal power plant, power generated by a hydropower plant, power generated by a nuclear power plant, or power generated by solar power, etc.

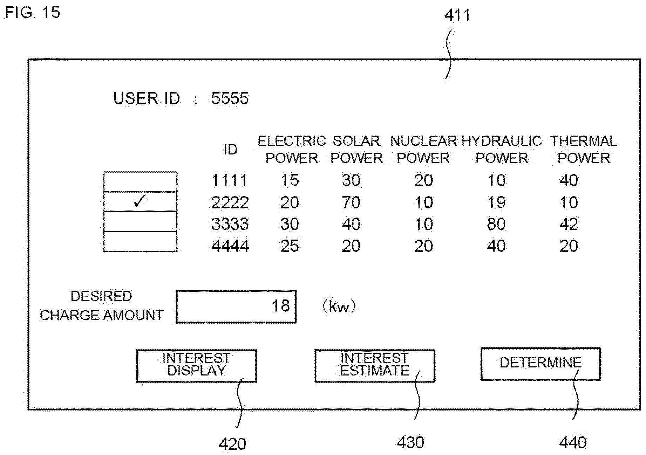

FIG. 15 is a diagram showing the screen 411, which confirms a condition of the plurality of battery apparatuses 110 when the second user wishes to charge. The screen 411 can be displayed by placing a "display origin" button on the screen 412 shown in FIG. 8 or the screen 413 shown in FIG. 9 and clicking this button. As shown in FIG. 15, the second user can confirm how power held by each of the plurality of battery apparatuses 110 is generated and the power amount for each type.

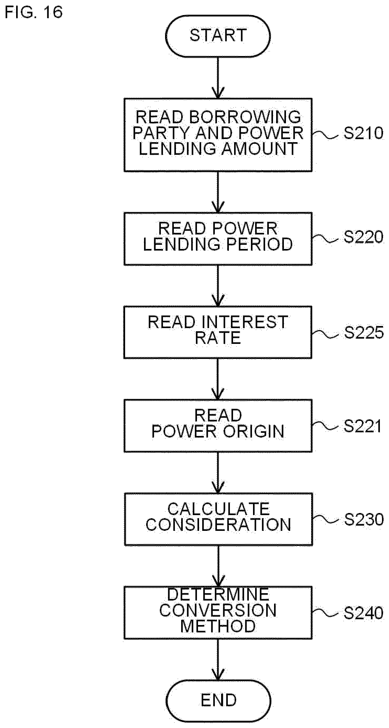

FIG. 16 is a flowchart showing an example of information processing by the controller 210. As shown in FIG. 16, the determination unit 320 reads a party to whom the power is lent and a power amount lent from the power lending information 224 stored in the storage unit 220 (S210). Next, the determination unit 320 reads power lending period from the power lending information 224 (S220). Then, the determination unit 320 reads an interest rate agreed between the first user and the second user from the interest rate information 225 (S225). Next, the determination unit 320 reads a power origin from the power lending information 224 (S221).

It should be noted that order of S210, S220, S225 and S221 does not have to be the order described in the flowchart shown in FIG. 16 and may be read simultaneously in a single read process. The determination unit 320 calculates a consideration based on the information read in S210, S220, S225 and S221 (S230). Next, the determination unit 320 determines a return method of consideration to be returned by the second user to the first user (S240).

In other words, in the twelfth variation, the determination unit 320 determines the consideration to be returned by the second user to the first user based on the amount of power that is lent, the period during which the power is lent, the agreed interest rate, and the power origin.

In the twelfth variation, power can be bought and sold based on the power origin, and consideration can be determined in consideration of power cost according to the power origin.

### <Thirteenth variation>

Hereinafter, a thirteenth variation will be described. In the thirteenth variation, description of a part that overlap with the first embodiment, the first variation, the second variation, the third variation, the fourth variation, the fifth variation, the sixth variation, the seventh variation, the eighth variation, the ninth variation, the tenth variation, the eleventh variation, and the twelfth variation will be omitted as appropriate.

In the thirteenth variation, when power is lent to a device of the second user using the first battery apparatus 111, the power lending information 224 includes a user ID indicating a party to whom the power is lent (the second user in this case), a power lending amount, power lending period, and a distance between the first user and the second user, and the interest rate information 225 indicates information indicating an interest rate agreed upon between the first user and the second user at the time of lending.

Here, the distance between the first user and the second user is, as an example, a distance between the first battery apparatus 111 and the storage battery 120 of the second user at the time the first user determines to lend power to the second user.

Another example is the distance between a location where a charging reservation is established between the second user and the first user and charging is actually performed and a distance from the first user at the time the charging reservation is established. The distance between the first user and the second user is not limited to the examples given in the description and may be defined in other ways.

When applying the thirteenth variation, on the screen 412 displayed on the smartphone of the second user or the like shown in FIG. 8, a distance between the second user and each of the plurality of first users at the time of screen display shall be displayed along with IDs of the plurality of first users, an amount of retained power, and interest information for each period. In a graph on the screen 413 shown in FIG. 9, it is sufficient to add and display a consideration-corresponding to the distance between the second user and each of the plurality of first users at the time of screen display.

Further, in the screen 611 displayed on the smartphone of the second user or the like shown in FIG. 12 and the screen 711 displayed on the smartphone or the like of the first user shown in FIG. 13, a total amount including the consideration and the consideration depending on the distance between the first user and the second user at the time a trade contract is concluded should be displayed. Here, when a charging reservation is made, a position of the second user can be calculated by calculating the distance as the place where the charging reservation is made.

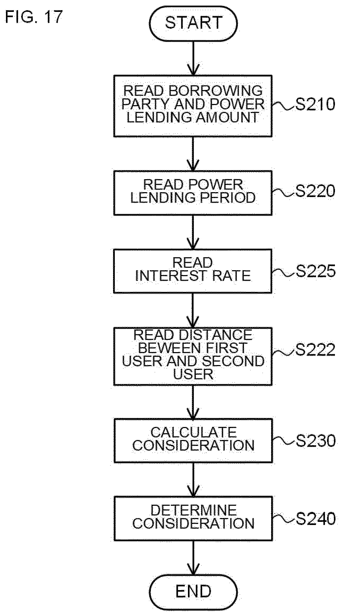

FIG. 17 is a flowchart showing an example of information processing by the controller 210. As shown in FIG. 17, the determination unit 320 reads a party to whom the power is lent and a power lending amount from the power lending information 224 stored in the storage unit 220 (S210). Next, the determination unit 320 reads power lending period from the power lending information 224 (S220). Then, the determination unit 320 reads an agreed interest rate from the interest rate information 225 (S225). Next, the determination unit 320 reads a distance between the first user and the second user from the power lending information 224 (S222).

It should be noted that order of S210, S220, S225 and S222 does not have to be the order described in the flowchart shown in FIG. 17 and may be read simultaneously in a single read process. The determination unit 320 calculates a consideration based on the information read in S210, S220, S225 and S222 (S230). Next, the determination unit 320 determines a consideration to be returned by the second user to the first user (S240).

In S230, the determination unit 320 calculates, for example, an interest in consideration according to the distance between the first user and the second user. Here, the interest in consideration indicates, for example, power required for the first battery apparatus 111 to reciprocate when charging the storage battery 120 of the second user from the first battery apparatus 111.

That is, in the thirteenth variation, the determination unit 320 determines the consideration that the first user receives back from the second user based on the power lending amount, the period during which power is lent, the agreed interest rate, and the distance between the first user and the second user.

In the thirteenth variation, by determining the consideration based on the distance between the first user and the second user, a value of power consumed by the first battery apparatus 111 owned by the first user as it moves to the second user can be reflected in the consideration.

### <Fourteenth variation>

Hereinafter, a fourteenth variation will be described. In the fourteenth variation, description of a part that overlap with the first embodiment, the first variation, the second variation, the third variation, the fourth variation, the fifth variation, the sixth variation, the seventh variation, the eighth variation, the ninth variation, the tenth variation, the eleventh variation, the twelfth variation, the thirteenth variation will be omitted as appropriate.

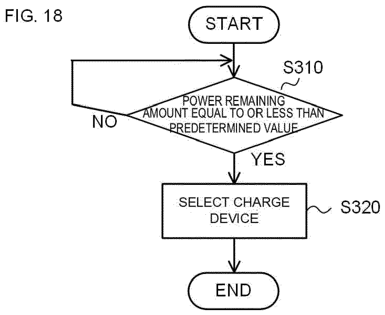

FIG. 18 is a flowchart showing an example of charge device selection process by the controller 210. As shown in FIG. 18, the management unit 310 reads remaining power information 222 stored in the storage unit 220, and when it is determined that remaining power of the first battery apparatus 111 is equal to or less than a predetermined value (YES in S310), the management unit 310 selects a device to charge the first battery apparatus 111 (S320). The device may be, for example, another battery apparatus other than the storage battery 120 and the first battery apparatus 111. Preferably, the management unit 310 selects the device to charge the first battery apparatus 111 from among the plurality of battery apparatuses 110. If the management unit 310 determines that the remaining power of the first battery apparatus 111 is not equal to or less than the predetermined value (NO in S310), the process returns to the determination of S310 again. The management unit 310 performs the determination of S310 at predetermined time intervals.

As another processing flow, for instance, communication may be performed between the plurality of battery apparatuses 110, and if the remaining power of the first battery apparatus 111 is equal to or less than the predetermined value, a charge request may be made to the second battery apparatus 112 whose remaining power is not equal to or less than the predetermined value. If the remaining power of the first battery apparatus 111 is equal to or less than the predetermined value, the first battery apparatus 111 may inquires the management unit 310, and the management unit 310 may select a device to charge the first battery apparatus 111. Furthermore, when the management unit 310 determines that the remaining power of the first battery apparatus 111 is equal to or less than the predetermined value, the management unit 310 may present the first user with a device capable of charging the first battery apparatus 111.

In addition, by managing the plurality of battery apparatuses 110 by the server apparatus 100, it is possible to suggest that the first battery apparatus 111 whose remaining power is equal to or less than a predetermined value should be charged.

The fourteenth variation assumed a case where power is lent from the first battery apparatus 111 to a device of the second user. If the first battery apparatus 111 excessively supplies power and the remaining power becomes less, the first user may not be able to use the first battery apparatus 111 at a desired timing. Therefore, by performing control as in the fourteenth variation, the remaining power of the first battery apparatus 111 is maintained at a predetermined value or more, thereby avoiding power shortage.

### <Fifteenth variation>

Hereinafter, a fifteenth variation will be described. In the fifteenth variation, description of a part that overlap with the first embodiment, the first variation, the second variation, the third variation, the fourth variation, the fifth variation, the sixth variation, the seventh variation, the eighth variation, the ninth variation, the tenth variation, the eleventh variation, the twelfth variation, the thirteenth variation, and the fifteenth variation will be omitted as appropriate.

In the fifteenth variation, when the first battery apparatus 111 is used to lend power to a device of the second user, the type of consideration that the first user receives back from the second user is power. The determination unit 320 determines the power amount to be returned from a second battery apparatus 112 to a device of the first user. The device of the first user includes, for instance, the storage battery 120 or the first battery apparatus 111. When the device of the first user is the first battery apparatus 111, the first battery apparatus 111 is charged directly, thus saving the first user trouble of separately charging the first battery apparatus 111.

### <Appendix>

The present invention may be provided in each of the following aspects.

The information processing apparatus, further comprising: a display controller configured to control to display a screen including a value indicating a consideration that the first user receives in return from the second user on a display unit of a terminal of the first user or a terminal of the second user.

The information processing apparatus, wherein: the determination unit is configured to determine a consideration to be returned by the second user to the first user based on a power lending amount, a power lending period, and a power origin.

The information processing apparatus, wherein: the determination unit is configured to determine a consideration to be returned by the second user to the first user based on a power lending amount, a power lending period, and a distance between the first user and the second user.

The information processing apparatus, further comprising: a consideration selection unit configured to allow the second user to select a type of consideration to be returned to the first user.

The information processing apparatus, wherein: the type of consideration is electric power.

The information processing apparatus, wherein: the battery apparatus includes a second battery apparatus that is a battery apparatus of the second user, and the determination unit is configured to determine a power amount to be returned by the second user to the first user.

The information processing apparatus, wherein: the determination unit is configured to determine a power amount to be returned by the second battery apparatus to the first battery apparatus.

The information processing apparatus, wherein: the management unit is configured to select a device to charge the first battery apparatus when a power remaining amount of the first battery apparatus is equal to or less than a predetermined value.

The information processing apparatus, wherein: the management unit is configured to select a device for charging the first battery apparatus from among the battery apparatuses.

The information processing apparatus, wherein: the consideration includes interest in addition to the power lending amount.

An information processing system, comprising: a management unit configured to manage a self-propelled battery apparatus, wherein the battery apparatus includes a first battery apparatus that is a battery apparatus of a first user; and a determination unit configured to determine a consideration to be returned by a second user to the first user based on a power lending amount and a power lending period when power is lent to a device of the second user using the first battery apparatus.

An information processing method, comprising: a management step of managing a self-propelled battery apparatus, wherein the battery apparatus includes a first battery apparatus that is a battery apparatus of a first user; and a determination step of determining a consideration to be returned by a second user to the first user based on a power lending amount and a power lending period when power is lent to a device of the second user using the first battery apparatus.

A program which allows an information processing apparatus to function as a management unit and a determination unit, wherein: the management unit is configured to manage a self-propelled battery apparatus; the battery apparatus includes a first battery apparatus that is a battery apparatus of a first user; and the determination unit is configured to determine a consideration to be returned by a second user to the first user based on a power lending amount and a power lending period when power is lent to a device of the second user using the first battery apparatus.

A storage medium readable by an information processing apparatus storing a program, wherein: the program allows the information processing apparatus to function as a management unit and a determination unit; the management unit is configured to manage a self-propelled battery apparatus; the battery apparatus includes a first battery apparatus that is a battery apparatus of a first user; and the determination unit is configured to determine a consideration to be returned by a second user to the first user based on a power lending amount and a power lending period when power is lent to a device of the second user using the first battery apparatus.

Of course, the present invention is not limited to the above aspects.

For instance, the present invention may be provided as a non-transitory computer readable media that stores the program described above.

In addition, the above-mentioned first embodiment and variations may be implemented in any combination.

According to the above-described first embodiment, etc., it is possible to realize optimization of consideration for power supply with a smaller amount of communication. Moreover, according to the above-described first embodiment, etc., it is possible to realize optimization of consideration for power supply with less processing by the controller 210 of the server apparatus 100.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

### REFERENCE SIGNS LIST

100: Server apparatus
110: Battery apparatus
111: First battery apparatus
111: First battery apparatus
112: Second battery apparatus
120: Storage battery
130: Network
210: Controller
220: Storage unit
221: Identification information
222: Power remaining amount information
223: Position information
224: Power lending information
225: Interest rate information
230: Display unit
240: Input unit
250: Communication unit
310: Management unit
320: Determination unit
330: Display controller
340: Consideration selection unit
412: Screen
413: Screen
430: Interest Estimate button
440: Determine button
460: Button
511: Screen
520: Accept button
530: Reject button
611: Screen
620: Confirm button
630: Return button
640: Return button
711: Screen
720: Confirm button
730: Urge button
811: Screen
820: Determine button
1000: Information processing systems

## Claims

1. An information processing apparatus, comprising:
a management unit configured to manage a self-propelled battery apparatus, wherein
the battery apparatus includes a first battery apparatus that is a battery apparatus of a first user; and
a determination unit configured to determine a consideration to be returned by a second user to the first user based on a power lending amount and a power lending period when power is lent to a device of the second user using the first battery apparatus.

2. The information processing apparatus according to claim 1, further comprising:
a display controller configured to control to display a screen including a value indicating a consideration that the first user receives in return from the second user on a display unit of a terminal of the first user or a terminal of the second user.

3. The information processing apparatus according to claim 1 or 2, wherein:
the determination unit is configured to determine a consideration to be returned by the second user to the first user based on a power lending amount, a power lending period, and a power origin.

4. The information processing apparatus according to claim 1 or 2, wherein:
the determination unit is configured to determine a consideration to be returned by the second user to the first user based on a power lending amount, a power lending period, and a distance between the first user and the second user.

5. The information processing apparatus according to claim 1 or 2, further comprising:
a consideration selection unit configured to allow the second user to select a type of consideration to be returned to the first user.

6. The information processing apparatus according to claim 5, wherein:
the type of consideration is electric power.

7. The information processing apparatus according to claim 6, wherein:
the battery apparatus includes a second battery apparatus that is a battery apparatus of the second user, and
the determination unit is configured to determine a power amount to be returned by the second user to the first user.

8. The information processing apparatus according to claim 7, wherein:
the determination unit is configured to determine a power amount to be returned by the second battery apparatus to the first battery apparatus.

9. The information processing apparatus according to claim 1 or 2, wherein:
the management unit is configured to select a device to charge the first battery apparatus when a power remaining amount of the first battery apparatus is equal to or less than a predetermined value.

10. The information processing apparatus according to claim 9, wherein:
the management unit is configured to select a device for charging the first battery apparatus from among the battery apparatuses.

11. The information processing apparatus according to claim 1 or 2, wherein:
the consideration includes interest in addition to the power lending amount.

12. An information processing system, comprising:
a management unit configured to manage a self-propelled battery apparatus, wherein
the battery apparatus includes a first battery apparatus that is a battery apparatus of a first user; and
a determination unit configured to determine a consideration to be returned by a second user to the first user based on a power lending amount and a power lending period when power is lent to a device of the second user using the first battery apparatus.

13. An information processing method, comprising:
a management step of managing a self-propelled battery apparatus, wherein
the battery apparatus includes a first battery apparatus that is a battery apparatus of a first user; and
a determination step of determining a consideration to be returned by a second user to the first user based on a power lending amount and a power lending period when power is lent to a device of the second user using the first battery apparatus.

14. A program which allows an information processing apparatus to function as a management unit and a determination unit, wherein:
the management unit is configured to manage a self-propelled battery apparatus;
the battery apparatus includes a first battery apparatus that is a battery apparatus of a first user; and
the determination unit is configured to determine a consideration to be returned by a second user to the first user based on a power lending amount and a power lending period when power is lent to a device of the second user using the first battery apparatus.

15. A storage medium readable by an information processing apparatus storing a program, wherein:
the program allows the information processing apparatus to function as a management unit and a determination unit;
the management unit is configured to manage a self-propelled battery apparatus;
the battery apparatus includes a first battery apparatus that is a battery apparatus of a first user; and
the determination unit is configured to determine a consideration to be returned by a second user to the first user based on a power lending amount and a power lending period when power is lent to a device of the second user using the first battery apparatus.
